## Europäisches Patentamt

## European Patent Office

## Office européen des brevets

(11) Veröffentlichungsnummer: **0 039 478**
**B1**

(12) **EUROPÄISCHE PATENTSCHRIFT**

(45) Veröffentlichungstag der Patentschrift:
**24.10.84**

(21) Anmeldenummer: **81103235.8**

(22) Anmeldetag: **29.04.81**

(51) Int. Cl.³: **C 01 G 21/06**

(54) Verfahren und Vorrichtung zur Erzeugung von technischem Bleioxid.

(30) Priorität: **02.05.80 DE 3016984**

(43) Veröffentlichungstag der Anmeldung:
**11.11.81 Patentblatt 81/45**

(45) Bekanntmachung des Hinweises auf die Patenterteilung:
**24.10.84 Patentblatt 84/43**

(84) Benannte Vertragsstaaten:
**AT BE DE FR GB IT NL**

(56) Entgegenhaltungen:
**DE - B - 1 467 347**
**DE - C - 328 044**
**DE - C - 1 209 179**
**FR - A - 391 612**
**FR - A - 400 270**
**FR - A - 1 414 313**
**GB - A - 1 364 391**
**US - A - 3 322 496**

(73) Patentinhaber: **Dr. Hans Heubach GmbH & Co. KG,**
**Heubachstrasse, D-3394 Langelsheim 1 (DE)**

(72) Erfinder: **Heubach, Rainer, Dipl.-Kfm., Nonnenweg 14,**
**D-3380 Goslar (DE)**
Erfinder: **Marx, Reinhard, Dr. Dipl.-Ing, Am Butterberg 6,**
**D-3388 Bad Harzburg (DE)**
Erfinder: **Kunz, Peter, Ing. grad, Sudermannstr. 6,**
**D-3380 Goslar 1 (DE)**
Erfinder: **Hauke, Dieter, Am Mühlbergholz 14,**
**D-3387 Vienenburg (DE)**

(74) Vertreter: **Patentanwälte Müller-Boré, Deufel, Schön,**
**Hertel, Lewald, Otto, Postfach 26 02 47 Isartorplatz 6,**
**D-8000 München 26 (DE)**

**Beschreibung**

Die Erfindung betrifft ein einstufiges Verfahren zur direkten Herstellung von technischem Bleioxid, bei dem flüssiges Blei in einen Reaktor eingegeben und in diesem unter Zufuhr von Luft gerührt sowie das entstandene Reaktionsprodukt abgezogen wird, und eine Vorrichtung zur Durchführung dieses Verfahrens.

Bleioxid ist Ausgangspunkt oder wesentlicher Bestandteil verschiedener chemischer Prozesse und muss einer Reihe von Qualitätsansprüchen genügen, die dessen Herstellung erschweren. So verläuft zwar die Grundreaktion $Pb + \frac{1}{2} O_2 = PbO$ relativ gut bereits bei Temperaturen ab 200°C, jedoch ist der Umsetzungsgrad dieser Reaktion bei bisher bekannten Verfahren so schlecht, dass zur Erzeugung eines qualitätsgerechten Produktes an die Voroxidation in einem ersten Reaktor eine Fertigoxidation in einer zweiten Verfahrensstufe angeschlossen werden muss. Auch das so erzeugte Bleioxid ist meist wegen seiner Korngrössenverteilung noch nicht verkaufsfertig und muss einer Siebung, Mahlung oder Sichtung in einer dritten Prozessstufe unterzogen werden.

So wird ein marktgerechtes Bleioxid mit mehr als 99,7% PbO und 60μm maximaler Korngrösse bisher recht umständlich erzeugt und derartige bekannte Verfahren sind aufwendig hinsichtlich des Kapitalbedarfs, der Energie- und auch der Personalkosten.

Die Verfahrensstufen Voroxidation und Fertigoxidation wurden im Laufe der Entwicklung verschiedentlich verbessert und auch die für die Voroxidation benutzte, als Barton-Reaktor bekannte Vorrichtung wurde abgeändert, um Leistung und Produktionsqualität zu erhöhen, jedoch wurde ein Oxidationsgrad von 99% im erzeugten Produkt praktisch nie überschritten. So wird z.B. gemäss der DE-AS 1 467 347 und der US-PS 3 322 496 bei Variierung von sowohl Bleials auch Luftzufuhr durch Zuführung von Luft in den Bodenteil des Reaktionsgefässes, durch Anbringung einer Stauscheibe vor der Abzugsöffnung für Reaktionsprodukt, durch Zwischenschaltung eines Zyklontrenners und durch Rückführung und Weiteroxidation der grösseren und schwereren Reaktionsproduktteilchen erreicht, dass der Gehalt an metallischem Blei bei weniger als 4 Gew.-% und vorzugsweise weniger als 2 Gew.-% liegt, wobei Einzelwerte von Probeentnahmen während der Verfahrensdurchführung gelegentlich knapp unter 1% liegen können, ohne allerdings den Durchschnittswert der Pb-Gehalts auf unter 1% zu drücken. Ein Produkt mit 1% metallischem Blei ist aber in den wichtigsten Verwendungsgebieten, wie der Glas-, Keramik- und Stabilisatorenindustrie, nicht akzeptabel.

Für die Steuerung der Reaktion im Barton-Reaktor sind folgende Systeme bekannt:

1. a) Konstanthaltung der Luftmenge, die durch den Reaktor gesaugt wird,
b) Zuführung des flüssigen Bleis portionsweise in Abhängigkeit von der Temperatur im Reaktor,
2. a) im zeitlichen Durchschnitt gleichmässige Bleizufuhr,
b) Steuerung der Luft in Abhängigkeit von der Temperatur im Reaktor.

In beiden Fällen lässt es sich erreichen, dass der Prozess automatisch abläuft und ein im Durchschnitt recht gleichmässiges Produkt erzeugt wird. Diese anscheinende Gleichmässigkeit verschwindet aber, wenn man während eines Regelkreislaufes mehrere Momentanproben zieht und analysiert. Je nach Schwankungsbreite der Reaktortemperatur findet man dann Abweichungen vom mittleren Oxidationsgrad, die viele Prozenteinheiten ausmachen können, was aber nur bei zweistufigen Verfahren nicht schädlich ist, weil nachoxidiert wird.

Solche Abweichungen sind aber unzulässig, wenn man ein praktisch vollkommen oxidiertes Produkt erzeugen will. Während eines Teilabschnittes im Regelzyklus könnte zwar vielleicht ein voll oxidiertes Produkt anfallen, danach entstände aber wieder für einige Zeit unzureichend Oxidiertes, und der Durchschnitt wäre auch unzureichend.

Der Erfindung liegt die Aufgabe zu Grunde, ein Verfahren und eine Vorrichtung zu schaffen, mit denen es möglich ist, einstufig Bleioxid des erforderlichen Reinheitsgrades und mit der erforderlichen Korngrösse herzustellen.

Erfindungsgemäss wird diese Aufgabe dadurch gelöst, dass zur Erzielung eines PbO-Gehaltes von wesentlich über 99%, vorzugsweise von 99,7 bis 99,8%, der Bleistrom konstant und gleichmässig zugeführt, die Reaktionstemperatur auf eine Temperatur im Bereich von über 500°C bis 640°C eingestellt wird und zur Einhaltung der vorgegebenen Reaktionstemperaturen bei maximalen Schwankungen von ±5°C der Luftstrom minimal verändert wird.

Es hat sich in überraschender Weise gezeigt, dass durch diese Verfahrensweise die Schwankungsbreite der Reaktionsbedingungen auf ein Minimum herabgesetzt werden kann.

Das bereits erwähnte Barton-Verfahren bedingt beim Überschreiten einer Temperatur von 480°C schlechte Ergebnisse (Restbleigehalte von mehr als 1%). Dieses Barton-Verfahren ist repräsentativ für ein Verfahren mit getrennter nachgeschalteter Nachoxidationsstufe und ist für die Herstellung stark bleihaltiger Oxide bestimmt. Die erwähnte US-A 3 322 496 betrifft eine Verbesserung dieses Barton-Verfahrens zur Herstellung von 96%igem Bleioxid, insbesondere 98%igem Bleioxid. Demgegenüber wird erfindungsgemäss ein Bleioxid mit einer Reinheit von mehr als 99% und insbesondere von mehr als 99,7% hergestellt. Im Gegensatz zu dem Barton-Verfahren, das bisher bei einer Maximaltemperatur von 480°C durchgeführt worden ist, wird erfindungsgemäss eine Temperatur von mindestens 500°C, vorzugsweise um 600°C, eingehalten, d.h., es wird innerhalb eines Temperaturbereiches gearbeitet, der bei dem bekannten Barton-Verfahren ungünstige Ergebnisse geliefert hat.

Darüber hinaus beruht die Erfindung auf der Erkenntnis, dass in engen Temperaturgrenzen um die tatsächliche Reaktionstemperatur herum die Temperatur bei der Durchführung des erfindungsgemässen Verfahrens konstant gehalten werden muss. Ausweislich der Beispiele der erwähnten US-PS treten erhebliche Temperaturschwankungen auf, so dass die Bedeutung der Temperaturkonstanthaltung bisher nicht erkannt worden war, vor allem nicht bei der Herstellung von Bleioxiden mit einem geringen Bleigehalt.

In der DE-C-1 209 179 wird ein Verfahren zur Herstellung von Bleioxid mit wenigstens etwa 38% Restblei beschrieben, wobei in diesem Falle die Reaktionstemperatur unter dem Schmelzpunkt von Blei bleibt.

Die FR-A-391 612 befasst sich mit der Trennung von Bleioxid von verbliebenem Blei, d.h., dass auch in diesem Falle kein reines Bleioxid hergestellt werden soll.

Die FR-A-400 270 beschreibt die Herstellung von Bleioxid unter dem Schmelzpunkt von Blei, wobei die eingehaltenen Reaktionstemperaturen zwischen 308 und 397°C liegen. Es handelt sich um ein typisch zweistufiges Verfahren, da in diesem Falle nachoxidiert werden muss.

Auch gemäss der DE-B-1 467 347 wird eine Temperatur von 328 bis 485°C eingehalten, wobei der Bleigehalt des erhaltenen Oxids praktisch immer über 1% liegt.

Bei der Durchführung des erfindungsgemässen Verfahrens ist es von besonderem Vorteil, wenn das Blei mit einer Temperatur $T_{Pb}$ direkt in dem Reaktor eingedüst wird, die in der Nähe der Reaktionstemperatur $T_R$ liegt, aber nicht mehr als 50°C niedriger ist. Dies bedeutet, dass das Blei mit einer Temperatur in den Reaktor eintritt, die nicht wesentlich unter der Prozesstemperatur liegt.

Die Viskosität flüssigen Bleis nimmt mit der Temperatur sehr stark ab, so dass das zugeführte Blei um so schneller und vollständiger durch das Rührwerk im Reaktor zerteilt und oxidiert wird, je heisser es ist. Eine Zuführung des Bleis durch eine Einlassöffnung im Reaktor, die auch kalte Luft mit einströmen lässt, und wie sie in herkömmlichen Ausführungsweisen üblich ist, kann daher nicht zugelassen werden. Das Metall muss vielmehr für sich und mit möglichst hoher Temperatur eingedüst werden, wobei ein Versprühen mit erhitzter Pressluft vorteilhaft ist.

Sind alle den Oxidierprozess bestimmenden Grössen, also Bleidosierung und -temperatur, Luftdosierung und Prozesstemperatur, einmal aufeinander abgestimmt, so läuft die Reaktion vollkommen gleichmässig und bedarf im Prinzip keiner weiteren Steuerung als der Kompensation kleiner Schwankungen, die sich bei einzelnen Einflussgrössen rein zufällig ergeben können. Eine solche Kompensation kann durch minimale Veränderung des Luftdurchsatzes vorgenommen werden, wobei die steuernde Grösse immer die Reaktortemperatur ist. Dieselbe darf nicht mehr als ±5°C schwanken, vorzugsweise ±2°C, was sich bei Einhaltung der oben geschilderten Bedingungen gut erreichen lässt, und soll zwischen 480°C und 640°C, vorzugsweise 600°C, eingestellt werden. Niedrigere Solltemperaturen führen zu unvollständiger Reaktion, höhere zu Schwierigkeiten durch Sinterung des Produktes.

In einfachster Weise kann die Bleidosierung dadurch konstant gehalten werden, dass das flüssige Blei aus einem Gefäss in den Reaktor über eine Düse eingeführt wird, in welcher der Bleipegel kostant gehalten wird. Auf diese Weise ist oberhalb der Düse immer ein konstanter statischer Druck vorhanden, so dass die Zuführungsbedingungen des Bleis konstant sind.

Zur Durchführung des Verfahrens kann mit Vorteil ein Vorratsbehälter über dem Reaktor angeordnet sein, aus dem sich eine auswechselbare Düse in den Reaktionsraum erstreckt und dieser Vorratsbehälter ist über eine Speiseleitung und einem Überlauf mit einem Schmelzbehälter verbunden. Speiseleitung und Überlauf sorgen in einfachster Weise bei dieser Ausführungsform für einen konstanten Pegel und damit einen konstanten Druck.

Um eine Verstopfung der Düse zu vermeiden, kann mit Vorteil an der Düse eine steuerbare Reinigungsnadel angeordnet sein, mit der von Zeit zu Zeit die Düse gereinigt wird.

Es kann aber auch vorteilhaft sein, dass die Düse eine an sich bekannte Sprühdüse ist, der erhitzte Pressluft über eine durch den Schmelzkessel verlaufende Leitung zugeführt wird.

Ausführungsbeispiele der Erfindung sollen in der folgenden Beschreibung unter Bezugnahme auf die Figuren der Zeichnung erläutert werden. Es zeigen

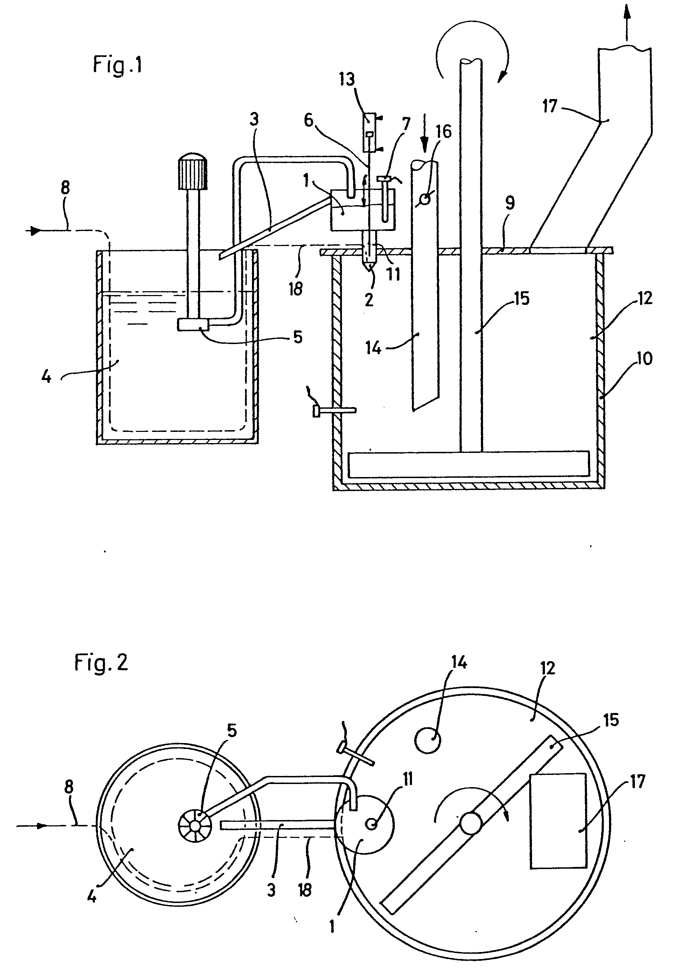

Figur 1 eine schematische Schnittansicht einer Vorrichtung zur Durchführung des Verfahrens und

Figur 2 eine schematische Draufsicht auf die in Figur 1 dargestellte Vorrichtung.

Über dem Deckel eines Barton-Reaktors 10 ist dicht am Rand ein Vorratsbehälter 1 für flüssiges Blei angeordnet, der im Boden einen Rohrstutzen 11 aufweist, welcher durch eine Bohrung im Ofendeckel bis in den Reaktionsraum reicht. In diesem Rohrstutzen 11 ist eine Düse 2 auswechselbar eingesetzt, die eine genau kalibrierte Bohrung für den Bleiausfluss besitzt. Der Vorratsbehälter 1 hat ausser dem erwähnten Bleiauslauf noch einen Bleiüberlauf 3, der in einen Schmelzkessel 4 zurückführt. Eine Tauchpumpe 5 in diesem Schmelzkessel 4 pumpt ständig einen Überschuss an Blei in den Vorratsbehälter 1, so dass dieser stets auf ein konstantes Niveau gefüllt bleibt und sich über der Düse 2 der statische Druck des Bleis nicht verändert. Damit die Düse 2 mit der Zeit nicht durch Oxide verstopft wird, wird sie in geregelten Zeitabständen durch eine Stahlnadel 6 gleichen Durchmessers automatisch durchstossen und gereinigt. Diese Stahlnadel 6 kann von einem Arbeitszylinder in gesteuerter Weise betätigt werden. Mit dieser Vorrichtung wird sowohl eine vollkommen gleichmässige Bleidosierung erreicht, als auch vermieden, dass das Blei zusammen mit kühlender Luft in den Reaktor 10 tritt. Die Temperatur des eingedüsten Bleis kann mit einem Thermoelement 7 genau überwacht und geregelt werden. Die Luftzuführung erfolgt über die Leitung 14 mit Drossel 16, und ein Rührer 15 verrührt das flüssige Blei. Ein Abzug des Bleioxids erfolgt über die Leitung 17 in an sich bekannter Weise.

Das Versprühen des Bleis mit erhitzter Pressluft kann so ausgeführt werden, dass die in den Rohrstutzen 11 eingesetzte Düse 2 als Sprühdüse an sich bekannter Bauart ausgebildet ist und Pressluft durch im Schmelzkessel angeordneter Rohrspiralen 8 geleitet, erhitzt und dann in die Düse, wie bei 18 schematisch gezeigt, geleitet wird.

Das folgende Beispiel erläutert die Erfindung.

Durchführungsbeispiel des Verfahrens

In einem Reaktor mit 1400 mm $\varnothing$ wurde eine Bleimenge von 420 kg/h mit 550°C eingedüst, wobei die Reaktionstemperatur auf 600°C eingestellt war, die Drehzahl des Rührwerkes betrug 200 UpM. Das in einem Zyklon und nachgeschaltetem Filter abgeschiedene Oxid hatte während einer Produktionsperiode von drei Wochen einen maximalen PbO-Gehalt von 99,88%, während die minimale Analyse 99,75% betrug; der Durchschnitt lag bei 99,80%. Als Siebrückstand über 60 μm wurde ein Anteil von 0,24% gefunden.

Das erzeugte Bleioxid wurde auf seine Verwendbarkeit in den meisten Anwendungsgebieten untersucht, wobei sich überall positive Ergebnisse einstellten. Insbesondere liessen sich ausgezeichnete Gläser und Glasuren erschmelzen und nasschemisch Bleipigmente und Bleisalze wie beispielsweise Stabilisatoren für die Kunststoffindustrie herstellen.

**Patentansprüche**

1. Einstufiges Verfahren zur direkten Herstellung von technischem Bleioxid, bei dem flüssiges Blei unter im zeitlichen Durchschnitt gleichmässiger Bleizufuhr in einen Reaktor eingegeben und in diesem unter Zufuhr von Luft gerührt sowie das entstandene Reaktionsprodukt abgezogen wird, dadurch gekennzeichnet, dass zur Erzielung eines PbO-Gehaltes von wesentlich über 99%, vorzugsweise von 99,7 bis 99,8%, der Bleistrom konstant und gleichmässig zugeführt, die Reaktionstemperatur auf eine Temperatur im Bereich von über 500°C bis 640°C eingestellt wird und zur Einhaltung der vorgegebenen Reaktionstemperatur bei maximalen Schwankungen von ± 5°C der Luftstrom minimal verändert wird.

2. Verfahren nach Anspruch 1, dadurch gekennzeichnet, dass die Reaktionstemperatur auf 600°C eingestellt wird.

3. Verfahren nach einem der Ansprüche 1 oder 2, dadurch gekennzeichnet, dass das flüssige Blei aus einem Gefäss, in welchem der Bleispiegel konstant gehalten wird, in den Reaktor über eine Düse eingeführt wird.

4. Verfahren nach Anspruch 1 oder 2, dadurch gekennzeichnet, dass das erhitzte Blei mittels erhitzter Pressluft in den Reaktor versprüht wird.

5. Vorrichtung zur Durchführung des Verfahrens nach einem der Ansprüche 1 bis 4, mit Einrichtungen zur Einspeisung und Steuerung von aufgeschmolzenem Blei und Luft, zur Rührung und Temperaturkontrolle des Reaktorinhalts und zum Abziehen des Reaktionsprodukt dadurch gekennzeichnet, dass ein Vorratsbehälter (1) für aufgeschmolzenes Blei über dem Reaktor (10) angeordnet ist, aus dem sich eine mit einer steuerbaren (13) Reinigungsnadel (6) versehene auswechselbare Düse (2) in den Reaktionsraum (10) erstreckt, und dass dieser Vorratsbehälter (1) über eine Speiseleitung (5) und einem Überlauf (3) mit einem Schmelzbehälter (4) verbunden ist.

6. Vorrichtung nach Anspruch 5, dadurch gekennzeichnet, dass die Düse (2) eine an sich bekannte Sprühdüse ist, der erhitzte Pressluft über eine durch den Schmelzkessel (4) verlaufende Leitung zugeführt wird.

**Claims**

1. Single-stage process for the direct production of technical lead oxide, in which liquid lead is introduced into a reactor at a lead feed rate which is uniform on time average and is stirred in the reactor with air being fed in and the reaction product formed is withdrawn, characterised in that, for reaching a PbO content of substantially above 99%, preferably from 99.7 to 99.8%, the lead stream is fed in constantly and uniformly, the reaction temperature is set to a temperature in the range from above 500°C to 640°C and, to maintain the preset reaction temperature, minimum changes are made to the air flow for maximum fluctuations of ±5°C.

2. Process according to Claim 1, characterised in that the reaction temperature is set to 600°C.

3. Process according to one of Claims 1 or 2, characterised in that the liquid is fed into the reactor via a nozzle from a vessel in which the lead level is kept constant.

4. Process according to Claim 1 or 2, characterised in that the heated lead is sprayed into the reactor by means of heated compressed air.

5. Apparatus for carrying out the process according to one of Claims 1 to 4, with devices for feeding and controlling molten lead and air, for stirring and temperature control of the reactor contents and for withdrawing the reaction product, characterised in that a stock tank (1) for molten lead is arranged above the reactor (10), from which tank an exchangeable nozzle (2) provided with a controllable (13) cleaning needle (6) extends into the reaction space (10), and that this stock tank (1) is connected via a feed line (5) and an overflow (3) to a melt tank (4).

6. Apparatus according to Claim 5, characterised in that the nozzle (2) is a spray nozzle known per se, to which heated compressed air is fed via a line running through the melt vessel (4).

## Revendications

1. Procédé en une seule opération pour la préparation directe d'oxyde de plomb technique dans lequel le plomb liquide est introduit dans un réacteur où il est amené avec un débit dans le temps en moyenne régulier, et est brassé dans ce réacteur sous arrivée d'air, le produit réactionnel étant évacué, caractérisé en ce que, pour obtenir une teneur en PbO sensiblement supérieure à 99%, de préférence comprise entre 99,7 et 99,8%, le courant de plomb est amené de façon constante et régulière, la témperature de réaction est réglée à une température située dans une plage entre 500°C et 640°C, et, pour respecter la température de réaction prescrite avec des écarts maximaux de ±5°C, le courant d'air ne subit que des variations minimales.

2. Procédé selon la revendication 1, caractérisé en ce que la température de réaction est réglée à 600°C.

3. Procédé selon une quelconque des revendications 1 ou 2, caractérisé en ce que le plomb liquide est introduit par une buse dans le réacteur à partir d'un récipient dans lequel le niveau du plomb est maintenu constant.

4. Procédé selon la revendication 1 ou 2, caractérisé en ce que le plomb à haute température, est pulvérisé dans le réacteur à l'aide d'air comprimé à haute température.

5. Appareil pour la mise en œuvre du procédé selon une quelconque des revendications 1 à 4 avec des équipements pour l'alimentation et la commande du plomb fondu et de l'air, pour le brassage et le contrôle de la température du contenu du réacteur et pour le soutirage du produit réactionnel, caractérisé en ce qu'au dessus du réacteur (10) est disposé un réservoir (1) d'où sort une buse (2) interchangeable munie d'une aiguille de nettoyage (6) commandable (13) et d'étendant à l'intérieur de l'espace de réaction (10), et en ce que ce réservoir (1) est relié par une conduite d'alimentation (5) et par un trop-plein (3) à un récipient de fusion (4).

6. Appareil selon la revendication 5, caractérisé en ce que la buse (2) est une tuyère de pulvérisation connue en soi à laquelle de l'air comprimé chaud est amené par une conduite passant à travers la chaudière de fusion (4).

Fig.1

Fig. 2